# EUROPÄISCHE PATENTSCHRIFT

(11) **EP 2 550 852 B1**
(45) Veröffentlichungstag und Bekanntmachung des Hinweises auf die Patenterteilung: **16.07.2014**
(21) Anmeldenummer: 12167008.7
(22) Anmeldetag: 07.05.2012
(51) Int. Cl.: A01D 41/127

(54) **Verfahren zur Steuerung eines Ernteprozesses eines Mähdreschers**
Method for controlling a harvesting process of a combine harvester
Procédé de commande d'un processus de récolte d'une moissonneuse-batteuse

(30) Priorität: 29.07.2011 DE 102011052282
(43) Veröffentlichungstag der Anmeldung: 30.01.2013
(73) Patentinhaber: CLAAS Selbstfahrende Erntemaschinen GmbH, 33428 Harsewinkel (DE)
(72) Erfinder: Brune, Markus, 33428 Marienfeld (DE); Behnke, Willi, 33803 Steinhagen (DE)

(56) Entgegenhaltungen:
- EP-A1- 0 728 409
- US-A- 4 259 829

## Beschreibung

Die vorliegende Erfindung betrifft ein Verfahren zur Steuerung eines Ernteguttrennprozesses eines Mähdreschers gemäß dem Oberbegriff des Anspruches 1. Weiterhin betrifft die Erfindung einen Mähdrescher zur Durchführung des Verfahrens gemäß dem Oberbegriff des Anspruches 9.

Aus der US 4,259,829 A ist ein Verfahren zur Messung des zum Obersieb vorhanden Gradienten des Luftstromes bekannt, mit welchem die Quer- und Längsverteilung des sowie die Gewichtsverteilung des Erntegutes auf dem Obersieb bestimmt werden soll. Hierzu sind in Querrichtung des Obersiebes unterhalb einer Lamelle mehrere Sensoren derart angeordnet, dass diese nicht mit Erntegut in Berührung kommen können. Mittels dieser Sensoren, die als Thermistoren ausgeführt sind, wird der Luftstrom erfasst, indem das Maß der Abkühlung der Thermistoren hervorgerufen durch den Luftstrom in elektrische Signale umgesetzt wird Das unterschiedliche Maß der Abkühlung der Thermistoren wird als Indikator herangezogen, wie sich das Erntegut auf dem Obersieb Verteilt.

Ein derartiges Verfahren offenbart die EP 0 728 409. Den als Abscheidesiebe ausgeführten Abscheideorganen der landwirtschaftlichen Erntemaschine sind untenseitig eine Vielzahl sogenannter Abscheidesensoren zugeordnet, die während des Betriebes der Erntemaschine in Abhängigkeit von der abgeschiedenen Erntegutmenge Messwerte generieren, die in einer Auswerteinheit zur Ermittlung eines Ist-Abscheideverlaufes herangezogen werden. Der ermittelte Ist-Abscheideverlauf wird mit einem Ideal-Abscheideverlauf verglichen, um in Abhängigkeit von auftretenden Abweichungen zwischen den Abscheideverläufen die Gebläsedrehzahl zu verändern, was zu einer Angleichung des Ist-Abscheideverlaufes an den Ideal-Abescheideverlauf führen soll

Als nachteilig an diesem Verfahren erweist sich, dass diesem ein rein mathematisches Modell zu Grunde liegt, welches sich ändernde Erntebedingungen in eingeschränktem Umfang durch eine Änderung einzelner Koeffizienten des mathematischen Modells durch den Bediener des Mähdreschers berücksichtigt. Das Verfahren orientiert sich bei der Einstellung der Gebläsedrehzahl an einem initial festgelegten Ideal-Abscheideverlauf, der nur in geringem Maße veränderbar ist und wofür weiterreichende Kenntnisse des Bedieners vorausgesetzt werden, um diese Anpassung des mathematischen Modells sinnvoll durchführen zu können.

Der vorliegenden Erfindung liegt die Aufgabe zu Grunde, ein Verfahren der eingangs genannten Art bereitzustellen, welches eine Verbesserung der Reinigungseinstellung ermöglicht. Weiterhin ist es eine Aufgabe der Erfindung, eine geeignete Vorrichtung zur Durchführung des Verfahrens bereitzustellen.

Diese Aufgabe wird erfindungsgemäß durch die kennzeichnenden Merkmale des Anspruches 1 erreicht.

Gemäß Anspruch 1 wird vorgeschlagen, dass aktuelle Abscheidungsverläufe des Erntegutes über die Breite der Reinigungsvorrichtung an in Förderrichtung zueinander beabstandeten Stellen mittels eines Sensorpaares ermittelt werden. Diese aktuell ermittelten Abscheidungsverläufe werden ausgewertet, um ein Bild von der Verteilung des Erntegutes auf der Reinigungsvorrichtung zu erhalten. Anhand der aktuell ermittelten Abscheidungsverläufe durch Vergleich der aktuell ermittelten Abscheidungsverläufe miteinander sowie im Vergleich mit den für die verschiedenen Auflockerungsphasen charakteristischen, in einer Steuerungsvorrichtung hinterlegten Abscheidungsverläufen. die in dem Endbereich der Reinigungsvorrichtung auftreten, wird die in Förderrichtung vorliegende Auflockerungsphase erkannt, woraufhin zumindest eine Maßnahme in Abhängigkeit von der erkannten Auflockerungsphase eingeleitet wird, welche zu einer Optimierung der Auflockerung auf zumindest einem Abschnitt der Reinigungsvorrichtung führt. Vorteilhaft ist, dass durch die Detektion der Abscheidungsverläufe über die Breite der Reinigungsvorrichtung die auf der Reinigungsvorrichtung in Förderrichtung auftretenden, in Folge des unterschiedlichen Abscheideverlaufes örtlich unterschiedlichen Auflockerungsphasen identifiziert werden können. Hierbei werden im Wesentlichen drei Auflockerungsphasen unterschieden, die unterschiedliche Einflüsse auf die Abscheidung des Korns aus dem Erntegut auf der Reinigungsvorrichtung haben. Somit kann auf Grundlage der Detektion der Abscheidungsverteilung von Korn über die Breite der Reinigungsvorrichtung auf die in Förderrichtung aktuell auftretenden Auflockerungsphasen geschlossen werden, um geeignete Maßnahmen einzuleiten, die zu einer Optimierung der Auflockerung führen. Bei der so genannten Schüttungsphase kommt es auf Grund eines zu geringen Luftdruckes in Relation zu der Erntegutmenge zu einer örtlichen Anhäufung von Erntegut im hinteren Bereich der Reinigungsvorrichtung. Die Schüttungsphase geht mit einer im Anfangsbereich der Reinigungsvorrichtung geringen Abscheidung einher, die erst im Verlauf der Förderung des Erntegutes in Längsrichtung der Reinigungsvorrichtung ansteigt. Dre Wirbelschichtphase entspricht der angestrebten optimalen Auflockerungsphase im Reinigungsprozess. In der Wirbelschichtphase ist die Abscheidung auf Grund einer nahezu optimalen Auflockerung des Erntegutes am größten, das Verhältnis von Luftdruck und Strömungsgeschwindigkeit zur Erntegutmenge ist nahezu optimal. Bei der so genannten Flugphase ist die Strömungsgeschwindigkeit in Relation zu der Erntegutmenge auf der Reinigungsvorrichtung zu hoch, so dass das Erntegut mit dem Luftstrom über die Reinigungsvorrichtung getragen wird, ohne eine hinreichende Abscheidung zu erreichen. Die unterschiedlichen Auflockerungsphasen können gleichzeitig und örtlich begrenzt in der Reinigungsvorrichtung auftreten. Die häufigste Ursache für die Entstehung unterschiedlicher Auflockerungsphasen ist die ungleichmäßige Erntegutverteilung in der Reinigungsvorrichtung, die häufig durch eine Neigungsänderung der in hügeligen oder bergigen Regionen hervorgerufen wird. In Abhängigkeit von der erkannten Auflockerungsphase sollte durch die mindestens eine Maßnahme zumindest auf eines der Aggregate Abscheidevorrichtung, Reinigungsvorrichtung oder Gebläse eingewirkt werden. Eine weitere Möglichkeit besteht in der Beeinflussung der zugeführten Erntegutmenge und -verteilung bei deren Aufnahme durch ein Erntegutvorsatzgerät.

Vorzugsweise kann in Abhängigkeit von der erkannten Auflockerungsphase die Gebläsedrehzahl bereichsweise verändert werden. Hierdurch kann bei auftretender Seiten- und/oder Querneigung die Gebläsedrehzahl entsprechend der sich einstellenden Auflockerungsphasen auf der Reinigungsvorrichtung in Förderrichtung beziehungsweise quer hierzu individuell eingestellt werden. Diese Maßnahme wird bei der Erkennung einer Schüttungs- oder Flugphase ergriffen, um im Fall der Schüttungsphase die Drehzahl und damit den Luftdruck zu erhöhen oder im Fall der Flugphase die Drehzahl zu verringern, um die Strömungsgeschwindigkeit zu reduzieren.

Vorteilhafterweise kann die Gebläsedrehzahl individuell an die Erntegutmenge angepasst werden. Hierbei kann eine Ansteuerung einzelner Gebläse der Gebläsestufe vorgesehen sein, um insbesondere bei einer örtlich begrenzt auftretenden Schüttungs- oder Flugphase in Folge einer Seitenneigung des Mähdreschers gezielt dieser entgegenwirken zu können.

Als eine weitere Maßnahme ist die Beeinflussung der Luftströmungsführung denkbar, bei der zumindest eine Drosselklappe oder zumindest ein Windleitblech in den Strömungskanälen der Gebläsestufe angesteuert werden, um die Strömungsgeschwindigkeit respektive den Luftdruck in Abhängigkeit von der erkannten Auflockerungsphase beeinflussen zu können.

Alternativ kann die Erntegutmenge an die Gebläsedrehzahl angepasst werden. Hierbei ist die automatische Anpassung der Vorfahrtregelung in Abhängigkeit von der erkannten Auflockerungsphase denkbar, um die aufgenommene Erntegutmenge zu variieren. Insbesondere kann in Abhängigkeit von der erkannten Auflockerungsphase die Schwingungsanregung des mindestens einen Siebes verändert werden.

Vorteilhafterweise kann in Abhängigkeit von der erkannten Auflockerungsphase die Öffnungsweite des mindestens einen Siebes der Reinigungsvorrichtung verändert werden. Die Siebseite, die auf Grund einer auftretenden Flugphase eine geringere Abscheidung aufweist, wird ausgehend von einer Voreinstellung der Sieböffnungsweite weiter geschlossen, während die Siebseite, die auf Grund einer auftretenden Schüttungsphase eine höhere Abscheidung aufweist, ausgehend von einer Voreinstellung der Sieböffnungsweite weiter geöffnet wird.

Als eine weitere Maßnahme kann die Zuführbreite des Erntegutes am Schneidwerk verändert werde, indem so genannte Schneckenblechverlängerungen zum Einsatz kommen. Hierdurch lässt sich der Gutfluss durch den Mähdrescher zu einem frühen Zeitpunkt beeinflussen, um dadurch ein gleichmäßigere Abscheidungsverteilung zu erreichen. Vorzugsweise kann dem Bediener des Mähdreschers ein optischer und/oder akustischer Hinweis gegeben werden, eine Schneckenblechverlängerung am Schneidwerk vorzunehmen, um eine gleichmäßigere Abscheideverteilung in der Reinigung zu erhalten.

Alle zuvor genannten Maßnahmen lassen sich einzeln oder miteinander kombiniert anwenden, um eine Optimierung der Auflockerung auf der Reinigungsvorrichtung und damit der Abscheidung insbesondere bei einer Seiten- und/oder Querneigung des Mähdreschers zu erreichen.

Weiterhin betrifft die vorliegende Erfindung gemäß dem unabhängigen Anspruch 9 einen Mähdrescher zur Durchführung des Verfahrens nach einem der Ansprüche 1 bis 8, mit einer Abscheidevorrichtung, von der Erntegut an eine Reinigungsvorrichtung abgebbar ist, die mindestens ein oszillierend antreibbares Sieb mit verstellbarer Öffnungsweiten aufweist, sowie einem Gebläse, durch welches das mindestens eine Sieb mit einem Luftstrom zur Auflockerung des darauf befindlichen Erntegutes beaufschlagbar ist.

Erfindungsgemäß wird gemäß dem unabhängigen Anspruch 9 vorgeschlagen, dass im Bereich der Reinigungsvorrichtung wenigstens zwei Sensoren angeordnet sind, mit denen die aktuelle Verteilung der Abscheidung des Erntegutes zumindest über die Breite der Reinigungsvorrichtung ermittelbar ist. Im einfachsten Fall kann ein Sensor unterhalb der Reinigungsvorrichtung sowie ein weiterer Sensor anstelle eines Verlustsensors hinter der Reinigungsvorrichtung eingesetzt werden, welche den Abscheidungsverlauf über die Breite der Reinigungsvorrichtung zwischen diesen beiden erfassen. Um die Genauigkeit der Erfassung des Abscheidungsverhaltens zu erhöhen sind vorteilhafterweise mehrere Sensoren parallel zueinander, im Wesentlichen äquidistant über die Länge der Reinigungsvorrichtung verteilt unterhalb dieser angeordnet, um eine Änderung des Abscheideverlaufes zu einem frühen Zeitpunkt erfassen und zumindest eine entsprechende Maßnahme einleiten zu können. Gemäß einer vorteilhaften Ausgestaltung kann die Anbringung der Abscheidesensoren in Längsrichtung das heißt in Förderrichtung des Erntegutes auf der Reinigungsvorrichtung erfolgen. Hierdurch kann mit einer geringen Anzahl an Sensoren die Verteilung der Abscheidung in Förderrichtung wie auch über die Breite der Reinigungsvorrichtung erfasst werden. Ein weiterer dieser Anordnung Vorteil besteht darin, dass die Genauigkeit der Verteilung der Abscheidung in Förderrichtung erhöht wird, da diese Längsrichtung lückenlos erfasst wird.

Gemäß dem Unteranspruch 10 wird vorgeschlagen, dass die Reinigungsvorrichtung ein Obersieb und ein Untersieb aufweist und dass die wenigstens zwei Sensoren unterhalb des Obersiebes angeordnet sind.

Gemäß dem Unteranspruch 11 wird vorgeschlagen, dass die Reinigungsvorrichtung ein Obersieb und ein Untersieb aufweist und dass die wenigstens zwei Sensoren zumindest im Abgabebereich des Obersiebes angeordnet sind.

Vorzugsweise kann die Abscheidevorrichtung als ein Axialtrennrotor mit mehreren Abscheidbereichen ausgeführt sein, deren Durchlässigkeit für Erntegut durch das individuelle Verstellen von Rotorklappen in Längs- und Querrichtung des Axialtrennrotors veränderbar ist.

Des Weiteren kann eine Gebläsestufe mit mindestens zwei Gebläsen vorgesehen sein, deren jeweilige Drehzahl unabhängig voneinander variierbar ist.

Insbesondere können im Bereich der Reinigungsvorrichtung verstellbare Seitenwindführungsvorrichtungen angeordnet sein. Bei einer auftretenden Seitenneigung des Mähdreschers führt die hangseitig reduzierte Erntegutmenge auf der Reinigungsvorrichtung zu einer Abscheidungserhöhung, das heißt, es tritt eine Flugphase auf. Dies ist auf die höhere Strömungsgeschwindigkeit des von den Gebläsen erzeugten Luftstromes zurückzuführen. Durch eine Verstellung der hangseitigen Seitenwindführungsvorrichtung wird eine Reduzierung der Strömungsgeschwindigkeit erreicht, wobei gleichzeitig der Luftdruck ansteigt, wodurch eine verbesserte Auflockerung an den Stellen mit mehr Erntegut, insbesondere zur Talseite hin, erreicht wird.

Die Erfindung wird nachstehend anhand von in den Zeichnungen dargestellten Ausführungsbeispielen näher erläutert.

Es zeigen:
- Fig. 1: eine schematisierte Längsschnittansicht eines Mähdreschers;
- Fig. 2: eine schematisierte Darstellung eines Obersiebes einer Reinigungsvorrichtung mit über die Länge der Reinigungsvorrichtung aufgetragenen, beispielhaften Kurvenverläufen von Auflockerungsphasen;
- Fig. 3: einen Verlauf von Abscheidungskurven, die über die Breite der Reinigungsvorrichtung aufgetragenen sind;
- Fig. 4: eine schematisierte Darstellung einer zweiten Ausführungsform der Reinigungsvorrichtung mit zwei Sensoren zur Erfassung des Abscheideverlaufes über die Breite der Reinigungsvorrichtung;
- Fig. 5: eine schematische Darstellung der Reinigungsvorrichtung gemäß einer dritten Ausführungsform mit mehreren unterhalb der Reinigungsvorrichtung angeordneten Sensoren;
- Fig. 6: eine schematische Darstellung einer vierten Ausführungsform der Reinigungsvorrichtung mit zwei in Förderrichtung unterhalb der Reinigungsvorrichtung angeordneten Sensoren zur Erfassung des Abscheideverlaufes.

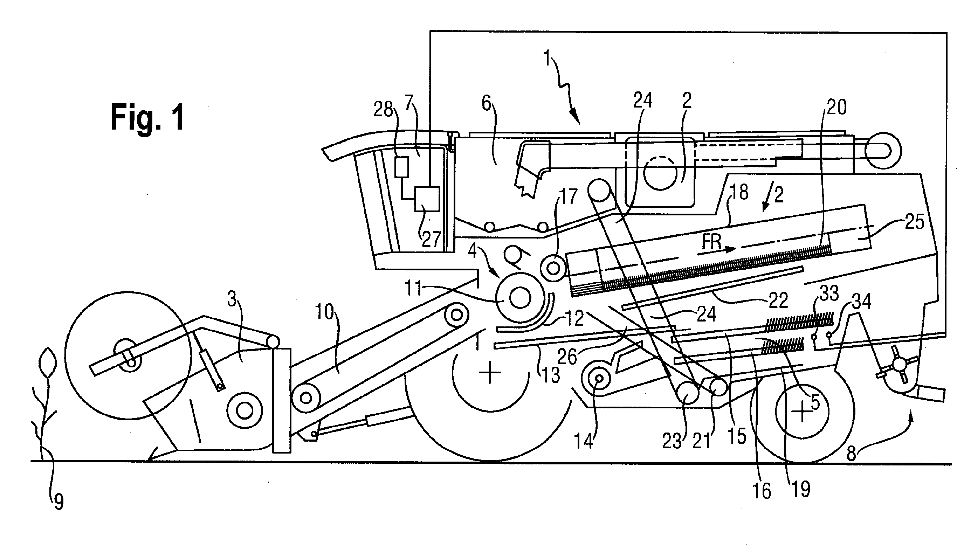

Die Darstellung in Fig. 1 zeigt eine Längsschnittdarstellung eines Mähdrescher 1. Der Mähdrescher 1 hat eine in etwa kastenförmige Karosserie, in der benachbart zu ihrer Oberseite in zentraler Position ein Verbrennungsmotor 2 untergebracht ist. Vor dem Motor 2 befinden sich ein Korntank 6 und eine Fahrerkanzel 7. In seinem Frontbereich trägt der Mähdrescher 1 ein höhenverstellbares Schneidwerk 3, welches gewachsenes Erntegut 9 auf großer Breite aberntet und in seitlicher Richtung zusammen- und einem Schrägförderorgan 10 zuführt. Über das Schrägförderorgan 10 gelangt das Erntegut in an sich bekannter Weise zu den Dreschorganen 4, die in der Darstellung der Fig. 1 eine Dreschtrommel 11, eine dieser nachgeordnete Wendetrommel 17 und einen Dreschkorb 12 umfassen. Durch Öffnungen des Dreschkorbs 12 hindurch wird aus dem Erntegut ein erster im Wesentlichen aus Körnern, Kurzstroh und Spreu bestehender Erntegutstrom abgeschieden und fällt auf einen Vorbereitungsboden 13. Durch Rüttelbewegungen des Vorbereitungsbodens 13 wird der Erntegutstrom darauf nach hinten, in Richtung einer Reinigungseinrichtung 5, gefördert. Der Vorbereitungsboden 13 ist oberflächlich quer geriffelt, um die Förderung des Erntegutstroms in ansteigender Richtung zu erleichtern.

Der nicht durch den Dreschkorb 12 hindurch getretene Teil des Erntegutstromes wird über die Wendetrommel 17 weiter befördert zu einem Axialrotor 18, der sich in Längsrichtung des Mähdreschers 1 über einen großen Teil von dessen Länge erstreckt. Der Axialrotor 18 ist in seinem unteren Bereich von einem halbzylindrischen Sieb 20 umgeben, über das ein zweiter, im Wesentlichen aus Korn und Ährenbruchstücken bestehender Erntegutstrom abgeschieden wird und auf einen Rücklaufboden 22 gelangt. An Stelle eines einzelnen Axialrotors 18 könnten auch zwei parallele Axialrotoren nebeneinander vorgesehen sein. Als alternative Abscheidevorrichtung können auch Hordenschüttler zum Einsatz kommen. Erntegut, im Wesentlichen Stroh, das am rückwärtigen Ende 25 des Axialrotors 18 ausgeworfen wird, gelangt zu einem Verteiler 8 am Heck des Mähdreschers 1.

Auf einem rüttelnd bewegten Rücklaufboden 22 wird der zweite Erntegutstrom vorwärts gefördert an die Reinigungseinrichtung 5 übergeben, wo er sich mit dem durch den Dreschkorb 12 hindurch getretenen ersten Erntegutstrom vereinigt, der von dem Vorbereitungsboden 13 an die Reinigungseinrichtung 5 abgegeben wird.

Die Reinigungseinrichtung 5 umfasst ein Obersieb 15, ein Untersieb 16 und ein Gebläse 14, welches die Siebe 15, 16 mit einem Luftstrom beaufschlagt. Unterhalb des Obersiebes 15 ist in dessen Endbereich ein als Stabsensoren ausgeführtes Sensorpaar 33, 34 angeordnet, welches sich quer zur Förderrichtung FR erstreckt. Die Sensoren 33, 34 sind mit einer Steuerungsvorrichtung 27 verbunden. Das in den vom Vorbereitungsboden 13 beziehungsweise Rücklaufboden 22 kommenden Erntegutströmen enthaltene Korn passiert nacheinander das Obersieb 15 sowie das Untersiebe 16 und erreicht über einen darunter liegenden Boden 19 eine Schneckenfördereinrichtung 23 und einen Kornelevator 24, der es in einen im Rücken der Fahrerkabine 7 angeordneten Korntank 6 fördert.

Anteile des Erntegutstroms, die leichter als das Korn sind, werden beim Herabfallen vom Vorbereitungsboden 13 auf das Obersieb 15, vom Obersieb 15 auf das Untersieb 16 oder vom Untersieb 16 auf den Boden 19 von dem Luftstrom des Gebläses 14 erfasst und mitgerissen, erreichen den Verteiler 8 und werden über diesen ausgeschieden. Schwere, gröbere Anteile des Erntegutstromes gelangen über eine Überkehr am rückwärtigen Ende der Siebe 15, 16 in einen unterhalb der Siebe 15, 16 quer verlaufenden Graben. Eine in dem Graben rotierende Schnecke 21 räumt das Material seitwärts zu einem Überkehrelevator 26, der es zurück zu den Dreschorganen 4 befördert. Weiterhin weist der Mähdrescher 1 eine sensorische Einrichtung 28 zur Bestimmung einer Neigung in Längs- und Querrichtung auf, die mit der Steuerungsvorrichtung 27 verbunden sind. Die Steuerungsvorrichtung 27 steht unter anderem mit der Reinigungseinrichtung 5, den Abscheidaggregaten wie den Dreschorganen 4 und dem Axialrotor18 oder einem Hordenschüttler, und dem Gebläse 14 in Wirkverbindung, um diese zu steuern.

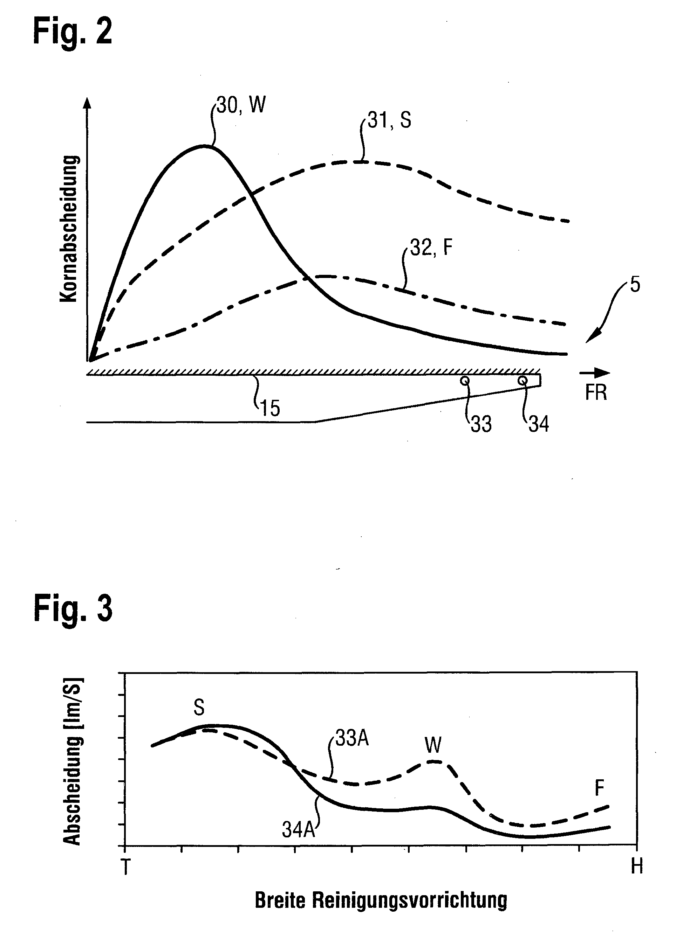

Die Darstellung in Fig. 2 zeigt eine schematisierte Darstellung des Obersiebes 15 der Reinigungsvorrichtung 5 in Seitenansicht. Unterhalb des Obersiebes 15 ist in dessen Endbereich ein Sensorpaar 33, 34 angeordnet, welches die Kornabscheidung in diesem Bereich erfasst. Ein mit dem Bezugszeichen FR versehener Pfeil deutet die Förderrichtung des Erntegutes auf der Reinigungsvorrichtung 5 an. Die Darstellung gemäß Fig.2 zeigt über die Länge des Obersiebes 15 aufgetragene, exemplarische Kurvenverläufe 30, 31, 32 der Kornabscheidung, welche auf Grund unterschiedlicher Auflockerungsphasen F, S, W während des Reinigungsprozesses auftreten können. Bei den Auflockerungsphasen F, S, W handelt es sich um die Wirbelschichtphase W, die Schüttungsphase S oder die Flugphase F, die während des Reinigungsvorganges über die Breite der Reinigungsvorrichtung verteilt auch in Kombination auftreten können. Eine Vielzahl derartiger, von dem Vorliegen einer der Auflockerungsphasen F, S, W abhängigen Kurvenverläufe 30, 31, 32 sind in der Steuerungsvorrichtung 27 des Mähdreschers 1 abrufbar hinterlegt.

Mit dem Bezugszeichen 30 ist der Abscheidungsverlauf des Korns bei Vorliegen einer Wirbelschichtphase W als Auflockerungsphase bezeichnet, der als durchgehende Linie dargestellt ist. Die Wirbelschichtphase W wird im Allgemeinen für den Vorgang der Reinigung als optimale Auflockerungsphase angestrebt, da in der Wirbelschichtphase W die Entmischung des Erntegutes am größten ist. Bereits zu Beginn der Reinigungsvorrichtung 5 wird eine hohe Kornabscheidung erreicht, so dass über die Länge der Reinigungsvorrichtung 5 eine optimale Abscheidung erreichbar ist. Der Abscheidungsverlauf 30 zwischen den Sensoren 33 und 34 im Endbereich der Reinigungsvorrichtung 5 ist gegenüber dem Abscheidungsverlauf 30 am Anfang der Reinigungsvorrichtung 5 deutlich abgefallen, da der verbleibende Kornanteil in dem zu reinigenden Erntegut sehr gering ist.

Mit gestrichelter Linie 31 ist eine mögliche Verlaufsform des Abscheidungsverlaufes des Korns bei Vorliegen einer Schüttungsphase S als Auflockerungsphase dargestellt. Die Schüttungsphase S tritt bei einem Ungleichgewicht zwischen dem Luftdruck der von dem Gebläse 14 erzeugten Luftströmung und der Erntegutmenge in der Reinigungsvorrichtung 5 auf, bei dem der von dem Gebläse 14 erzeugte Druck der Luftströmung für die aufzulockernde Erntegutmenge in der Reinigungsvorrichtung 5 zu gering ist. Die Anhäufung von Erntegut auf der Reinigungsvorrichtung 5 verhindert eine optimale Entmischung des Erntegutes, was mit einer reduzierten Abscheideleistung einhergeht. Der Abscheidungsverlauf 31 des Korns in der Schüttungsphase S unterscheidet sich von dem in der Wirbelschichtphase W dadurch, dass der Abscheidungsverlauf 31 ein Maximum erreicht, welches in Förderrichtung FR gesehen deutlich hinter dem Maximum im Abscheidungsverlauf 30 der Wirbelschichtphase W auftritt. Die Höhe des Abscheidungsverlaufes 31 ist bei der Schüttungsphase S am Ende der Reinigungsvorrichtung 5 deutlich höher als in der Wirbelschichtphase W. Der Abscheidungsverlauf 31 in der Schüttungsphase S ist am Ende der Reinigungsvorrichtung 5 abfallend, verbleibt aber im Vergleich zu dem Abscheidungsverlauf 30 in der Wirbelschichtphase W auf einem hohen Niveau. Im Endbereich der Reinigungsvorrichtung 5 tritt während der Schüttungsphase S unabhängig vom übrigen Abscheidungsverlauf 31 eine insgesamt höhere Kornabscheidung auf, als bei der Wirbelschichtphase W gemäß dem Abscheidungsverlauf 30.

Mit strichpunktierter Linie 32 ist ein möglicher Abscheidungsverlauf des Korns bei Vorliegen einer Flugphase F als Auflockerungsphase dargerstellt. Die Flugphase F tritt ebenfalls in Folge eines Ungleichgewichts zwischen dem Luftdruck der von dem Gebläse 14 erzeugten Luftströmung und der Erntegutmenge auf der Reinigungsvorrichtung 5 auf, bei dem der von dem Gebläse 14 erzeugte Gebläsedruck für die aufzulockernde Erntegutmenge auf der Reinigungsvorrichtung 5 zu hoch ist. Auf Grund des höheren Luftdruckes wird das Erntegut in Förderrichtung FR über die Reinigungsvorrichtung 5 getragen, so dass sich die Erntegutabscheidung in der Reinigungsvorrichtung 5 weiter nach hinten verlagert. Das Maximum der Abscheidung in der Flugphase F liegt im Vergleich mit der Wirbelschichtphase W im hinteren Bereich der Reinigungsvorrichtung 5. Auf Grund der geringeren Erntegutmenge liegt der Abscheidungsverlauf 32 unterhalb desjenigen in der Schüttungsphase S, und in der Regel am Ende der Reinigungsvorrichtung 5 oberhalb des Verlaufes in der Wirbelschichtphase W.

Eine Anordnung des Sensorenpaares 33, 34 lediglich in dem Endbereich des Obersiebes 15, wie in Fig. 2 dargestellt, hat den Vorteil, dass die hier zu erfassende Kornmenge des von dem Obersieb 15 abgegebenen Erntegutstromes nicht so hoch ist, wie in dem Anfangsbereich des Obersiebes 15, wo die Abscheidung des Korns im Allgemeinen am Größten ist, so dass die Detektiergrenze der Sensoren 33, 34 im Normalbetrieb nicht erreicht wird. Zudem ist an dieser Stelle die Abscheidungsgrenze, dass heißt das in Förderrichtung FR gesehen räumliche Ende der Reinigungsvorrichtung 5, sichtbar, so dass eine genaue Verlustabschätzung möglich ist, und dass die Verlustabschätzung schneller und eindeutiger erfolgen kann, als ausschließlich mit Verlustsensoren, die hinter der Reinigungsvorrichtung 5 angeordnet sind.

Fig. 3 zeigt eine beispielhafte Darstellung von Kurvenverläufen 33A, 34A, die auf von den jeweiligen Sensoren 33, 34 unterhalb des Obersiebes 15 über dessen Breite erfassten Signalen basiert. Die Kurvenverläufe 33A, 34A geben den durch den jeweiligen Sensor 33, 34 erfassten Verlauf der Kornabscheidung über die Breite der Reinigungsvorrichtung 5 im Endbereich des Obersiebes 15 wieder, die in Förderrichtung FR gesehen hintereinander angeordnet sind. Die Kurvenverläufe 33A, 34A zeigen eine Situation, in der der Mähdrescher 1 eine Seitenneigung aufweist. Entsprechend der Seitenneigung befindet sich auf der linken Seite der Darstellung der Kurvenverläufe 33A, 34A die Talseite T und auf der rechten Seite die Hangseite H. In dem talseitigen Bereich T der Reinigungsvorrichtung 5 stellt sich eine Schüttungsphase S ein, da sich das Erntegut schwerkraftbedingt hier stärker anhäuft. Im Mittenbereich stellt sich zumindest abschnittsweise eine Wirbelschichtphase W ein, die für den gesamten Prozess der Abscheidung als Optimum angestrebt wird. In dem hangseitigen Bereich der Reinigungsvorrichtung 5 ist die Flugphase F stark ausgeprägt, da hier im Verhältnis zu der Strömungsgeschwindigkeit des von dem Gebläse 14 bereitgestellten Luftstromes nur wenig Erntegut vorhanden ist.

Anhand der Kurvenverläufe 33A, 34A lassen sich die Verteilung der Querabscheidung als auch die Art der Auflockerungsphase F, S, W auf dem Obersieb 15 erkennen. Die Erkennung der Art der vorliegenden Auflockerungsphase F, S, W erfolgt durch den Vergleich der jeweiligen Kurvenverläufe 33A, 34A miteinander, die jeweils die Abscheidung über die Breite der Reinigungsvorrichtung an den Positionen der Sensoren 33, 34 repräsentieren sowie im Vergleich mit den für die verschiedenen Auflockerungsphasen F, S, W charakteristischen, in der Steuerungsvorrichtung 27 hinterlegten Abscheidungsverläufen 30, 31, 32, die in dem Endbereich der Reinigungsvorrichtung 5 auftreten können. In der Schüttungsphase S ist der Kurvenverlauf 33A, 34A zwischen den beiden Sensoren 33, 34 annähernd gleich und verbleibt auf einem hohen Abscheidungsniveau. Mit zunehmendem Abstand vom hangseitigen Rand des Obersiebes 15 nimmt die Abscheidung in der Schüttungsphase S sogar noch zu, da sich die Auflockerung des Erntegutes zu ändern beginnt. In der sich anschließenden Wirbelschichtphase W hingegen sind die Kurvenverläufe 33A, 34A zwischen den beiden Sensoren 33, 34 abfallend, da in Förderrichtung FR gesehen mit Erreichen des zweiten Sensors 34 weniger abscheidbares Erntegut zur Verfügung steht, als bei dem Erreichen des ersten Sensors 33. Bei der Flugphase F wird in Kenntnis einer von der sensorischen Einrichtung 28 erfassten Seitenneigung des Mähdreschers 1 davon ausgegangen, dass auf der Hangseite H der Erntegutanteil auf der Reinigungsvorrichtung 5 geringer ist, als auf der Talseite T. Dennoch wird ein Anstieg der Kurvenverläufe 33A, 34A erkannt, was auf das Ungleichgewicht zwischen dem Luftdruck der von dem Gebläse 14 erzeugten Luftströmung und der Erntegutmenge auf der Reinigungsvorrichtung 5 zurückzuführen ist, was zu einer Erhöhung der Abscheidung führt.

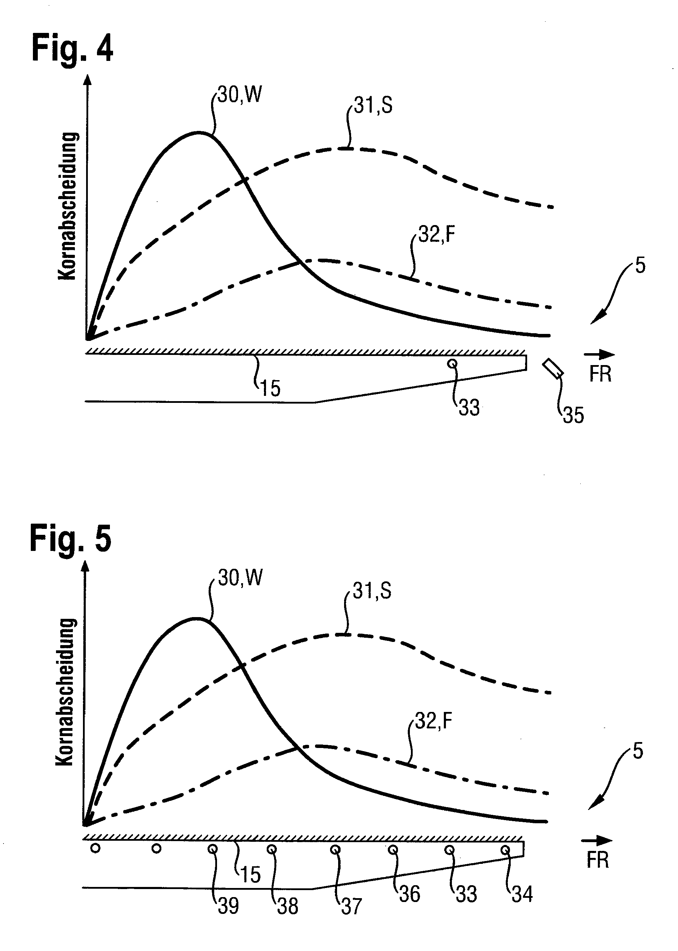

Die Darstellung in Fig. 4 zeigt eine schematisierte Darstellung einer zweiten Ausführungsform der Reinigungsvorrichtung 5 mit zwei Sensoren zur Erfassung des Abscheidungsverlaufes über die Breite der Reinigungsvorrichtung 5. Hierbei kommen ein erster die Querabscheidung erfassender Sensor 33 zur Erfassung der Verteilung der Querabscheidung unterhalb des Obersiebes 15 sowie als ein zweiter die Querabscheidung erfassender Sensor ein hinter dem Obersieb 15 angeordneter Verlustsensor 35 zum Einsatz. Die Verwendung des Verlustsensors 35 anstelle eines zusätzlichen zweiten, die Querabscheidung erfassenden Sensors 34, wie in der zuvor beschriebenen Ausführungsform erläutert wurde, stellt eine kostengünstigere Alternative dar, die jedoch nicht so präzise arbeitet wie die Variante mit mindestens zwei die Querabscheidung erfassenden Sensoren 33, 34 unterhalb des Obersiebes 15, da die erfassbare Abscheidung hinter dem Obersieb 15, das heißt an der Abscheidungsgrenze, von der auf dem Obersieb 15 erfassbaren Abscheidung abweicht.

Fig. 5 zeigt eine schematische Darstellung der Reinigungsvorrichtung 5 gemäß einer dritten Ausführungsform mit mehreren unterhalb der Reinigungsvorrichtung 5 angeordneten die Querabscheidung erfassende Sensoren 33, 34, 36, 37, ..., wodurch eine frühzeitige und sehr präzise Ermittlung der Verteilung der Querabscheidung ermöglicht wird, da die Anordnung einer Vielzahl von Sensoren 33, 34, 36, 37, ... die Erfassung des Abscheidungsverlaufes über die gesamte Längsausdehnung der Reinigungsvorrichtung 5 ermöglicht.

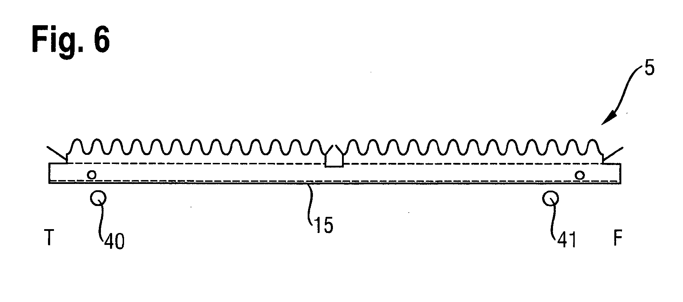

Die Darstellung in Fig. 6 zeigt eine schematische Ansicht einer vierten Ausführungsform der Reinigungsvorrichtung 5 mit zwei in Förderrichtung FR des Erntegutes unterhalb der Reinigungsvorrichtung 5 angeordneten Sensoren 40, 41 zur Erfassung der Abscheidungsverläufe 30, 31, 32 in Förderrichtung FR. Die beiden Sensoren 40, 41 sind parallel zueinander angeordnet und erstrecken sich gemäß dieser Ausführungsform in Längsrichtung der Reinigungsvorrichtung 5. Durch die Anordnung an dem äußeren Rand der unterhalb des Obersiebes 15 lässt sich die Abscheidungsverteilung des Erntegutes in Förderrichtung FR erfassen.

Verfahrensgemäß wird zur Steuerung des Ernteguttrennprozesses des Mähdreschers 1 der aktuelle Kurvenverlauf 33A, 34A der Abscheidung des Erntegutes über die Breite der Reinigungsvorrichtung 5 ermittelt. Die Sensoren 33, 34 erfassen die Verteilung des Korns, welches von dem Obersieb 15 der Reinigungsvorrichtung 5 in dessen hinterem Bereich abgegeben wird. Zur Erfassung der Verteilung der Querabscheidung wird von die Sensoren 33, 34, die als stabförmige Sensoren ausgebildet sind und sich quer zur Förderrichtung des Erntegutes zumindest über die Breite des Obersiebs 15 erstrecken, durch Schalllaufzeitdifferenzmessung die Abscheidungsverteilung 33A, 34A bestimmt. Die von den Sensoren 33, 34 generierten Signale werden durch die Steuerungsvorrichtung 27 verarbeitet, um den aktuellen Kurvenverlauf 33A, 34A der Querabscheidung zu ermitteln.

Anhand der Auswertung des aktuell ermittelten Kurvenverlaufes 33A, 34A werden die jeweils vorliegenden, über die Breite der Reinigungsvorrichtung 5 verteilten Auflockerungsphasen F, S, W erkannt. In die Auswertung fließen auch Parameter wie die Seiten- und/oder Querneigung des Mähdreschers 1 oder die aktuell eingestellte Gebläsedrehzahl am Gebläse 14 mit ein. Auf der Basis der Auswertung wird zumindest einer Maßnahme in Abhängigkeit von der erkannten Auflockerungsphase F, S, W eingeleitet, welche zu einer Optimierung des ermittelten Abscheidungsverlaufes des Erntegutes über die Breite zumindest eines Abschnittes der Reinigungsvorrichtung 5 führt. Angestrebt wird jeweils die Wirbelschichtphase W als Auflockerungsphase, da bei Auftreten dieser Auflockerungsphase der Reinigungsprozess am effizientesten abläuft. Als Maßnahmen kommen beispielsweise eine Variation der Sieböffnungsweite der Siebhälften von Obersieb 15 und Untersieb 16, eine Anpassung der einzelnen Gebläsedrehzahlen eines mehrere Gebläsestufen umfassenden Gebläses 14, eine Veränderung der Zuführung des Erntegutes durch die Verwendung von Schneckblechverlängerungen am Schneidwerk, eine Veränderung der Windführung in der Reinigungsvorrichtung 5 durch den Einsatz von verstellbaren Windleitblechen, in Frage, die jeweils in Abhängigkeit von der festgestellten Auflockerungsphase F, S, W eingeleitet werden. Die Variation der Sieböffnungsweite begünstigt das Abscheidungsverhalten der Reinigungsvorrichtung 5, indem die Sieböffnungsweite der abscheidungsschwächeren Siebseite vergrößert, während die abscheidungsstärkeren Siebseite verringert wird. Durch eine gezielte Variation der Gebläsedrehzahl einzelner Gebläsestufen lassen sich die Auswirkungen der Flugphase als vorliegende Auflockerungsphase auf das zu reinigende Erntegut reduzieren, indem durch eine Reduzierung der Gebläsedrehzahl die Kornverluste durch das Ausblasen vermindert werden. Der Prozess der Abscheidung kann durch diese Maßnahme an einer früheren Stelle auf der Reinigungsvorrichtung einsetzen, weil die Flugphase reduziert wird. Im Gegensatz hierzu würde sich durch eine Erhöhung der Gebläsedrehzahl bei Vorliegen einer Aufschüttungsphase die Auflockerung des Erntegutes verbessern, was zu einer Erhöhung der Abscheidung führt. Die Verwendung von Schneckenblechverlängerungen trägt zu einer Vergleichmäßigung der Gutzuführung in den Mähdrescher, was sich entsprechend in einer gleichmäßigeren Abscheidungsverteilung auf der Reinigungsvorrichtung 5 niederschlägt. Das Ansteuern von Windleitblechen in der Reinigungsvorrichtung 5 ermöglicht eine Reduzierung der Flugphase F auf der Hangseite H des Mähdreschers. Hierbei können die Maßnahmen sowohl einzeln als auch in Kombination durchgeführt werden, um eine optimale Abscheideverteilung zu erreichen.

**Bezugszeichenliste**

| | | | |
|---|---|---|---|
| 1 | Mähdrescher | 28 | sensorische Einrichtung zur Neigungsbestimmung |
| 2 | Motor | | |
| 3 | Schneidwerk | 30 | Abscheidungsverlauf Wirbelschichtphase |
| 4 | Dreschorgane | 31a | Abscheidungsverlauf Schüttungsphase |
| 5 | Reinigungsvorrichtung | 31b | Abscheidungsverlauf Schüttungsphase |
| 6 | Korntank | 32a | Abscheidungsverlauf Flugphase |
| 7 | Fahrerkanzel | 32b | Abscheidungsverlauf Flugphase |
| 8 | Verteiler | 33 | erster Sensor |
| 9 | Erntegut | 33A | Kurvenverlauf Querabscheidung |
| 10 | Schrägförderorgan | 34 | zweiter Sensor |
| 11 | Dreschtrommel | 34B | Kurvenverlauf Querabscheidung |
| 12 | Dreschkorb | 35 | Verlustsensor |
| 13 | Vorbereitungsboden | 36 | Sensor |
| 14 | Gebläse | 37 | Sensor |
| 15 | Obersieb | | |
| 16 | Untersieb | 40 | Sensor |
| 17 | Wendetrommel | 41 | Sensor |
| 18 | Axialrotor | | |
| 19 | Boden | F | Flugphase |
| 20 | Sieb | S | Schüttungsphase |
| 21 | Schnecke | W | Wirbelschichtphase |
| 22 | Rücklaufboden | | |
| 23 | Schneckenfördereinrichtung | H | Hangseite |
| 24 | Elevator | T | Talseite |
| 25 | Rückwärtiges Ende | | |
| 26 | Elevator | FR | Förderrichtung |
| 27 | Steuerungsvorrichtung | | |

## Patentansprüche

1. Verfahren zur Steuerung eines Ernteguttrennprozesses eines Mähdreschers (1) mit einer Abscheidevorrichtung (4, 18), von der Erntegut an eine Reinigungsvornchtung (5) abgegeben wird, die mindestens ein oszillierend antreibbares Sieb (15, 16) mit verstellbarer Öffnungsweite aufweist, um das im Erntegut befindliche Korn von Nichtkornbestandteilen zu trennen, sowie mit einem Gebläse (14), durch welches das mindestens eine Sieb (15, 16) der Reinigungsvorrichtung (5) mit einem Luftstrom zur Auflockerung des darauf befindlichen Erntegutes belaufschlagt wird, wobei sich während der Auflockerung des Erntegutes im Wesentlichen drei unterschiedliche Auflöckerungsphasen (F, S, W) einstellen, **gekennzeichnet durch** die Verfahrensschritte:
Ermitteln von aktuellen Abscheidungsverläufen (33A, 34A) des Erntegutes über die Breite der Reinigungsvorrichtung (5) an in Förderrichtung (FR) zueinander beabstandeten Stellen, mittels eines Sensorpaares (33, 34; 40, 41)
- Auswerten der aktuell ermittelten Abscheidungsverläufe (33A, 34A),
- Erkennen der in Förderrichtung (FR) vorliegenden Auflockerungsphase (F, S, W) **durch** Vergleich der aktuell ermittelten Abscheidungsverläufe (33A, 34A) miteinander sowie im Vergleich mit den für die verschiedenen Auflockerungsphasen (F, S, W) charakteristischen, in einer Steuerungsvorrichtung (27) hinterlegten Abscheidungsverläufen (30, 31, 32), die in dem Endbereich der Reinigungsvorrichtung (5) auftreten und
- Einleiten zumindest einer Maßnahme in Abhängigkeit von der erkannten Auflockerungsphase (F, S, W), welche zu einer Optimierung der Auflockerung auf zumindest einem Abschnitt der Reinigungsvorrichtung (5) führt

2. Verfahren nach Anspruch 1, **dadurch gekennzeichnet, dass** durch die mindestens eine Maßnahme zumindest auf eines der Aggregate Abscheidevorrichtung (4, 18) Reinigungsvorrichtung (5) oder Gebläse (14) eingewirkt wird.

3. Verfahren nach einem der Ansprüche 1 oder 2, **dadurch gekennzeichnet, dass** in Abhängigkeit von der erkannten Auflockerungsphase (F, S, W) die Gebläsedrehzahl bereichsweise verändert wird.

4. Verfahren nach Anspruch 3, **dadurch gekennzeichnet, dass** die Gebläsedrehzahl individuell an die Erntegutmenge angepasst wird.

5. Verfahren nach einem der Ansprüche 3 oder 4, **dadurch gekennzeichnet, dass** die Erntegutmenge an die Gebläsedrehzahl angepasst wird.

6. Verfahren nach einem der Ansprüche 1 bis 5, **dadurch gekennzeichnet, dass** in Abhängigkeit von der erkannten Auflockerungsphase (F, S, W) die Schwingungsanregung des mindestens einen Siebes (15, 16) verändert wird.

7. Verfahren nach einem der Ansprüche 1 bis 6, **dadurch gekennzeichnet, dass** in Abhängigkeit von der erkannten Auflockerungsphase (F, S, W) die Öffnungsweite des mindestens einen Siebes (15, 16) verändert wird.

8. Verfahren nach einem der Ansprüche 1 bis 7, **dadurch gekennzeichnet, dass** die Zuführbreite des Erntegutes verändert wird.

9. Mähdrescher (1) zur Durchführung des Verfahrens nach einem der Anspruche 1 bis 8, mit einer Abscheidevorrichtung (4, 18), von der Erntegut an eine Reinigungsvorrichtung (5) abgebbar ist, die mindestens ein oszillierend antreibbares Sieb (15, 16) mit verstellbarer Öffnungsweiten aufweist, sowie einem Gebläse (14), durch welches das mindestens eine Sieb mit einem Luftstrom zur Auflockerung des darauf befindlichen Erntegutes beaufschlagbar ist, **dadurch gekennzeichnet, dass** im Bereich der Reinigungsvorrichtung (5) wenigstens zwei Sensoren (33, 34; 40, 41) angeordnet sind, mit denen die aktuelle Verteilung der Abscheidung des Erntegutes zumindest über die Breite der Reinigungsvorrichtung (5) an in Förderrichtung (FR) zueinander beabstandeten Stellen ermittelbar ist, und Mittel vorhanden sind zum
- Auswerten der aktuell ermittelten Abscheidungsverläufe (33A, 34A),
- Erkennen der in Förderrichtung (FR) vorliegenden Auflockerungsphase (F, S, W) durch Vergleich der aktuell ermittelten Abscheidungsverläufe (33A, 34A) miteinander sowie im Vergleich mit den für die verschiedenen Auflockerungsphasen F, S, W charakteristischen, in einer Steuerungsvorrichtung (27) hinterlegten Abscheidungsverläufen (30, 31, 32), die in dem Endbereich der Reinigungsvorrichtung (5) auftreten und
- Einleiten zumindest einer Maßnahme in Abhängigkeit von der erkannten Auflockerungsphase (F, S, W), welche zu einer Optimierung der Auflockerung auf zumindest einem Abschnitt der Reinigungsvorrichtung (5) führt.

10. Mähdrescher (1) nach Anspruch 9, **dadurch gekennzeichnet, dass** die Reinigungsvorrichtung (5) ein Obersieb (15) und ein Untersieb (16) aufweist und dass die wenigstens zwei Sensoren (33, 34; 40,41) unterhalb des Obersiebes (15) angeordnet sind.

11. Mähdrescher (1) nach Anspruch 9, **dadurch gekennzeichnet, dass** die Reinigungsvorrichtung (5) ein Obersieb (15) und ein Untersieb (16) aufweist und dass die wenigstens zwei Sensoren (33, 34; 40,41) zumindest im Abgabebereich des Obersiebes (15) angeordnet sind.

12. Mähdrescher (1) nach einem der Ansprüche 9 bis 11, **dadurch gekennzeichnet, dass** die Abscheidevorrichtung (18) als ein Axialtrennrotor (18) mit mehreren Abscheidbereichen ausgeführt ist, deren Durchlässigkeit für Erntegut durch das individuelle Verstellen von Rotorklappen in Längs- und Querrichtung des Axialtrennrotors (18) veränderbar ist.

13. Mähdrescher (1) nach einem der Ansprüche 9 bis 12, **dadurch gekennzeichnet, dass** das Gebläse (13) als eine Gebläsestufe mit mindestens zwei Gebläsen ausgebildet ist, deren jeweilige Drehzahl unabhängig voneinander variierbar ist.

14. Mähdrescher (1) nach einem der Ansprüche 9 bis 13, **dadurch gekennzeichnet, dass** im Bereich der Reinigungsvorrichtung (5) verstellbare Seitenwindführungsvorrichtungen angeordnet sind.

## Claims

1. A method of controlling a crop material separating process of a combine harvester (1) comprising a separation device (4, 18) by which crop material is delivered to a cleaning device (5) having at least one oscillatingly drivable sieve (15, 16) with an adjustable opening width in order to separate the grain in the crop material from non-grain constituents, and a blower (14) by which the at least one sieve (15, 16) of the cleaning device (5) is acted upon with an air flow to loosen up the crop material disposed thereon, wherein during loosening of the crop material substantially three different loosening phases (F, S, W) are set, **characterised by** the method steps:
- ascertaining currently prevailing separation configurations (33A, 34A) of the crop material over the width of the cleaning device (5) at locations spaced from each other in the conveyor direction (FR) by means of a pair of sensors (33, 34; 40, 41),
- evaluating the currently ascertained separation configurations (33A, 34A),
- detecting the loosening phase (F, S, W) which is present in the conveyor direction (FR) by comparison of the currently ascertained separation configurations (33A, 34A) with each other and with comparison with the separation configurations (30, 31, 32) which are characteristic of the various loosening phases (F, S, W) and which are stored in a control device (27) and which occur in the end region of the cleaning device (5), and
- initiating at least one measure in dependence on the detected loosening phase (F, S, W), that leads to optimisation of loosening on at least a portion of the cleaning device (5).

2. A method according to claim 1 **characterised in that** the at least one measure provides for acting at least on one of the units consisting of the separation device (4, 18), the cleaning device (5) or the blower (14).

3. A method according to one of claims 1 and 2 **characterised in that** the blower rotary speed is altered region-wise in dependence on the detected loosening phase (F, S, W).

4. A method according to claim 3 **characterised in that** the blower rotary speed is individually adapted to the amount of crop material.

5. A method according to one of claims 3 and 4 **characterised in that** the amount of crop material is adapted to the blower rotary speed.

6. A method according to one of claims 1 to 5 **characterised in that** the oscillation excitation of the at least one sieve (15, 16) is altered in dependence on the detected loosening phase (F, S, W).

7. A method according to one of claims 1 to 6 **characterised in that** the opening width of the at least one sieve (15, 16) is altered in dependence on the detected loosening phase (F, S, W).

8. A method according to one of claims 1 to 7 **characterised in that** the feed width of the crop material is altered.

9. A combine harvester (1) for carrying out the method according to one of claims 1 to 8 comprising a separation device (4, 18) by which the crop material can be delivered to a cleaning device (5) having at least one oscillatingly drivable sieve (15, 16) with an adjustable opening width and a blower (14) by which the at least one sieve can be acted upon with an air flow for loosening up the crop material disposed thereon, **characterised in that** arranged in the region of the cleaning device (5) are at least two sensors (33, 34; 40, 41) with which the currently prevailing distribution of the separation of the crop material can be ascertained at least over the width of the cleaning device (5) at locations spaced from each other in the conveyor direction (FR), and there are provided means for
- evaluating the currently ascertained separation configurations (33A, 34A),
- detecting the loosening phase (F, S, W) which is present in the conveyor direction (FR) by comparison of the currently ascertained separation configurations (33A, 34A) with each other and with comparison with the separation configurations (30, 31, 32) which are characteristic of the various loosening phases (F, S, W) and which are stored in a control device (27) and which occur in the end region of the cleaning device (5), and
- initiating at least one measure in dependence on the detected loosening phase (F, S, W), that leads to optimisation of loosening on at least a portion of the cleaning device (5).

10. A combine harvester (1) according to claim 9 **characterised in that** the cleaning device (5) has an upper sieve (15) and a lower sieve (16) and the at least two sensors (33, 34; 40, 41) are arranged beneath the upper sieve (15).

11. A combine harvester (1) according to claim 9 **characterised in that** the cleaning device (5) has an upper sieve (15) and a lower sieve (16) and the at least two sensors (33, 34; 40, 41) are arranged at least in the delivery region of the upper sieve (15).

12. A combine harvester (1) according to one of claims 9 to 11 **characterised in that** the separation device (18) is in the form of an axial separating rotor (18) having a plurality of separation regions whose permeability for crop material is variable by individual adjustment of rotor flaps in the longitudinal and transverse directions of the axial separating rotor.

13. A combine harvester (1) according to one of claims 9 to 12 **characterised in that** the blower (13) is in the form of a blower stage having at least two blowers, the respective rotary speeds of which are variable independently of each other.

14. A combine harvester (1) according to one of claims 9 to 13 **characterised in that** adjustable crosswind guide devices are arranged in the region of the cleaning device (5).

## Revendications

1. Procédé de commande d'un processus de séparation de produit de récolte d'une moissonneuse-batteuse (1) équipée d'un dispositif de séparation (4, 18) par lequel un produit de récolte est transmis à un dispositif de nettoyage (5) qui comporte au moins une grille (15, 16) à largeur d'ouverture réglable et pouvant être entraînée en oscillation pour séparer le grain se trouvant dans le produit de récolte des composantes non-grain, ainsi que d'un ventilateur (14) par lequel ladite au moins une grille (15, 16) du dispositif de nettoyage (5) est soumise à un courant d'air pour disperser le produit de récolte qui se trouve dessus, sachant qu'il se produit sensiblement trois phases de dispersion différentes (F, S, W) pendant la dispersion du produit de récolte, **caractérisé par** les étapes de procédé suivantes :
- détermination des courbes de séparation instantanées (33A, 34A) du produit de récolte sur la largeur du dispositif de nettoyage (5) à des endroits espacés les uns des autres dans le sens de transport (FR) au moyen d'une paire de capteurs (33, 34 ; 40, 41),
- évaluation des courbes de séparation instantanées (33A, 34A) déterminées,
- reconnaissance de la phase de dispersion (F, S, W) présente dans le sens de transport (FR) par comparaison entre elles des courbes de séparation instantanées (33A, 34A) déterminées et par comparaison avec les courbes de séparation (30, 31, 32) caractéristiques des différentes phases de dispersion (F, S, W), stockées dans un dispositif de commande (27), qui apparaissent dans la zone terminale du dispositif de nettoyage (5), et
- déclenchement, en fonction de la phase de dispersion (F, S, W) reconnue, d'au moins une mesure qui conduit à une optimisation de la dispersion sur au moins une portion du dispositif de nettoyage (5).

2. Procédé selon la revendication 1, **caractérisé en ce que** ladite au moins une mesure agit au moins sur un des organes suivants : dispositif de séparation (4, 18), dispositif de nettoyage (5) ou ventilateur (14).

3. Procédé selon l'une des revendications 1 ou 2, **caractérisé en ce qu'**en fonction de la phase de dispersion (F, S, W) reconnue la vitesse de rotation du ventilateur est modifiée par zones.

4. Procédé selon la revendication 3, **caractérisé en ce que** la vitesse de rotation du ventilateur est adaptée individuellement à la quantité de produit de récolte.

5. Procédé selon l'une des revendications 3 ou 4, **caractérisé en ce que** la quantité de produit de récolte est adaptée à la vitesse de rotation du ventilateur.

6. Procédé selon l'une des revendications 1 à 5, **caractérisé en ce qu'**en fonction de la phase de dispersion (F, S, W) reconnue l'excitation en oscillation de ladite au moins une grille (15, 16) est modifiée.

7. Procédé selon l'une des revendications 1 à 6, **caractérisé en ce qu'**en fonction de la phase de dispersion (F, S, W) reconnue la largeur d'ouverture de ladite au moins une grille (15, 16) est modifiée.

8. Procédé selon l'une des revendications 1 à 7, **caractérisé en ce que** la largeur d'amenée du produit de récolte est modifiée.

9. Moissonneuse-batteuse (1) pour réaliser le procédé selon l'une des revendications 1 à 8, équipée d'un dispositif de séparation (4, 18), par lequel un produit de récolte peut être transmis à un dispositif de nettoyage (5) qui comporte au moins une grille (15, 16) à largeur d'ouverture réglable et pouvant être entraînée en oscillation, ainsi que d'un ventilateur (14) par lequel ladite au moins une grille peut être soumise à un courant d'air pour disperser le produit de récolte qui se trouve dessus, **caractérisé en ce qu'**au moins deux capteurs (33, 34 ; 40, 41) sont disposés dans la zone du dispositif de nettoyage (5), au moyen desquels la répartition instantanée de la séparation du produit de récolte peut être déterminée au moins sur la largeur du dispositif de nettoyage (5) à des endroits espacés les uns des autres dans le sens de transport (FR), et **en ce que** des moyens sont prévus pour
- évaluer les courbes de séparation instantanées (33A, 34A) déterminées,
- reconnaître la phase de dispersion (F, S, W) présente dans le sens de transport (FR) par comparaison entre elles des courbes de séparation instantanées (33A, 34A) déterminées et par comparaison avec les courbes de séparation (30, 31, 32) caractéristiques des différentes phases de dispersion (F, S, W), stockées dans un dispositif de commande (27), qui apparaissent dans la zone terminale du dispositif de nettoyage (5), et
- déclencher, en fonction de la phase de dispersion (F, S, W) reconnue, au moins une mesure qui conduit à une optimisation de la dispersion sur au moins une portion du dispositif de nettoyage (5).

10. Moissonneuse-batteuse (1) selon la revendication 9, **caractérisée en ce que** le dispositif de nettoyage (5) comporte une grille supérieure (15) et une grille inférieure (16), et **en ce que** lesdits au moins deux capteurs (33, 34 ; 40, 41) sont disposés au-dessous de la grille supérieure (15).

11. Moissonneuse-batteuse (1) selon la revendication 9, **caractérisée en ce que** le dispositif de nettoyage (5) comporte une grille supérieure (15) et une grille inférieure (16), et **en ce que** lesdits au moins deux capteurs (33, 34 ; 40, 41) sont disposés au moins dans la zone de décharge de la grille supérieure (15).

12. Moissonneuse-batteuse (1) selon l'une des revendications 9 à 11, **caractérisée en ce que** le dispositif de séparation (18) est réalisé sous la forme d'un rotor de séparation axial (18) à plusieurs zones de séparation dont la perméabilité au produit de récolte est modifiable par le réglage individuel de volets de rotor dans les directions longitudinale et transversale du rotor de séparation axial (18).

13. Moissonneuse-batteuse (1) selon l'une des revendications 9 à 12, **caractérisée en ce que** le ventilateur (13) est réalisé sous la forme d'un étage de ventilateurs formé d'au moins deux ventilateurs dont les vitesses de rotation respectives sont variables indépendamment l'une de l'autre.

14. Moissonneuse-batteuse (1) selon l'une des revendications 9 à 13, **caractérisée en ce que** des dispositifs guide-vent latéraux réglables sont disposés dans la zone du dispositif de nettoyage (5).
